**Europäisches Patentamt**

**European Patent Office**

**Office européen des brevets**

(19)

(11) Numéro de publication: **0 159 229**
**B1**

(12) **FASCICULE DE BREVET EUROPÉEN**

(45) Date de publication du fascicule du brevet:
21.06.89

(21) Numéro de dépôt: 85400495.9

(22) Date de dépôt: 14.03.85

(51) Int. Cl.⁴: **G 08 B 15/02,** B 29 B 7/32,
B 29 B 7/74, B 29 C 67/22 //
B29K105:04

(54) Dispositif autonome et automatique de production rapide de mousse polyuréthane.

(30) Priorité: 22.03.84 FR 8404457

(43) Date de publication de la demande:
23.10.85 Bulletin 85/43

(45) Mention de la délivrance du brevet:
21.06.89 Bulletin 89/25

(84) Etats contractants désignés:
BE CH DE GB IT LI LU NL SE

(56) Documents cité:
GB-A-2 091 925
US-A-4 126 184
US-A-4 202 279

(73) Titulaire: **COMMISSARIAT A L'ENERGIE
ATOMIQUE, 31/33, rue de la Fédération, F-75015
Paris (FR)**

(72) Inventeur: **Bazelaire, Bernard, 74, Avenue
Gambetta, F-33700 Merignac (FR)**
Inventeur: **Clebant, Jean- Claude, 8, Allée
Calmette, F-33560 Carbon- Blanc (FR)**

(74) Mandataire: **Mongrédien, André, c/o BREVATOME
25, rue de Ponthieu, F-75008 Paris (FR)**

EP 0 159 229 B1

## Description

La présente invention se rapporte d'une façon générale aux techniques de production de mousse polyuréthane par mélange d'un isocyanate avec un polyalcool, notamment le polyol.

Dans l'industrie, la production de telles mousses polyuréthane est généralement réalisée par des machines à deux composants, comportant deux réservoirs distincts qui assurent le dosage des produits de départ à l'aide de pompes volumétriques à haute pression. Ces dispositifs, qui sont bien adaptés à des installations lourdes pour une fabrication en continu, ont un temps de fonctionnement relativement long et ne répondent que très imparfaitement au problème de la production rapide d'une grande quantité de mousse polyuréthane sur les lieux mêmes de son utilisation, notamment en raison des impératifs de poids et d'encombrement qui sont incompatibles avec la réalisation d'un système portable.

D'autres moyens pour mettre en oeuvre les produits de base de préparation d'une mousse polyuréthane ont été conçus tels que le mélange à basse pression par agitateur mécanique, par exemple par hélice immergée, en aval d'un système de dosage volumétrique. Un tel dispositif est toutefois relativement complexe si l'on veut en rendre le fonctionnement automatique et fiable en n'importe quel endroit où une intervention est nécessaire.

On a également utilisé la production in situ et rapide de grandes quantités de mousses polyuréthane pour protéger des objets précieux tels qu'on en trouve par exemple dans les banques et dans les coffres de ces mêmes établissements en les dissimulant rapidement au sein d'une telle mousse qui constitue une enveloppe dissuasive et impénétrable pour tout tiers qui serait animé de mauvaises intentions à l'égard de ces mêmes objets précieux.

Une installation de ce genre est décrite notamment dans le document GB-A-2 091 925 qui est relatif à une telle protection d'un coffre fort.

Sur la fig. 1 de ce document, on voit, dans une partie arrière d'une enceinte forte 36 à protéger, un ensemble de production de mousse polyuréthane comprenant un réservoir d'air sous pression 32, deux récipients 23 et 24 contenant respectivement le polyol et l'isocyanate, un mélangeur 27 et une buse d'injection 28 vers l'espace 36 à protéger. En cas d'intrusion, un détecteur 34 libère l'air comprimé du réservoir 32 vers les récipients 23 et 24 et la mousse formée dans le mélangeur 27 est injectée dans l'espace 36 pour enrober et cacher les objets précieux qu'il contient.

Si le principe de cette installation est intéressant, sa mise en oeuvre pratique est néanmoins délicate, dès lors que l'on veut réaliser une protection d'une grande fiabilité, et ce pour plusieurs raisons:

- D'abord, le déclenchement de l'installation par air comprimé stocké est en général insuffisant pour produire, à coup sûr, des quantités importantes de mousse;

- Ensuite, réaliser le mélange des composés polyol et isocyanate par simple arrivée simultanée dans une enceinte réservée à cet effet ne garantit pas l'obtention correcte d'une mousse homogène et de propriétés constantes pendant tout le temps de la production.

La présente invention à précisément pour objet un dispositif autonome et automatique de production rapide de mousse polyuréthane qui répond aux impératifs précédents et qui, fonctionnant à moyenne pression de l'ordre de 20 à 40 bars, à comme caractéristique essentielle de réaliser, à partir d'un déclenchement explosif, un mélange homogène et fiable des deux composants.

Ce dispositif autonome et automatique de production rapide de mousse polyuréthane du genre de ceux dans lesquels ladite mousse est produite par mélange d'un isocyanate avec un polyalcool, notamment le polyol, comportant:

- des moyens de stockage étanche à deux compartiments dont chacun conserve l'un des produits précédents, un déclencheur générateur d'un gaz de pressurisation desdits moyens de stockage,

- un mélangeur apte à recevoir les deux produits précédents, dont le fonctionnement est commandé automatiquement par la pression régnant dans les moyens de stockage et comportant une chambre de mélange dans laquelle parviennent sous l'effet de cette même pression l'isocyanate et le polyol, se caractérise en ce que le déclencheur est du type à propergol solide, en ce que chacun des deux produits est introduit dans la chambre de mélange par des buses d'injection latérales produisant une mise en rotation du mélange, le polyol étant préalablement émulsionné dans le mélangeur par un gaz neutre, tel que l'air ou l'azote, en provenance d'un récipient de stockage sous pression dont l'ouverture est commandée également de façon automatique par l'entrée en fonctionnement du mélangeur à seuil.

On voit par conséquent que le dispositif selon l'invention, qui permet un stockage prolongé et sans problème des produits de base, est capable de réaliser automatiquement sur une simple commande de mise à feu d'un système à poudre, la production locale et rapide de grandes quantités de mousse polyuréthane protectrice vis-à-vis d'objets précieux que l'on veut dérober rapidement à la vue d'un agresseur éventuel. Le dispositif ne comporte aucune pièce mécanique active, notamment tournante, et c'est uniquement la pression engendrée par l'explosion du déclencheur à poudre qui commande la mise en fonctionnement automatique de l'appareil et la production rapide de la mousse.

Selon une caractéristique importante du dispositif objet de l'invention, l'organe de déclenchement du mélangeur est une gâchette manométrique à seuil de pression pouvant coulisser dans un canal rectiligne entre une position de stockage où elle est maintenue en place par une goupille cisaillable calibrée et une position de fonctionnement dans laquelle elle libère l'écoulement de l'isocyanate, du polyol et du gaz d'émulsion dans la chambre de mélange, le passage de la position de stockage à la position de fonctionnement étant commandé par l'apparition dans le réservoir de stockage d'un seuil de pression qui agit sur la tête de la gâchette, et la contraint à rompre la goupille calibrée et à se déplacer en translation dans son canal rectiligne.

Cette gâchette manométrique fonctionne par conséquent comme un tiroir dont le déplacement est commandé par la pression engendrée dans le réservoir de stockage à la suite de l'explositon du déclencheur à poudre; elle est réglée pour être sensible à un seuil de pression, concrétisé par la résistance mécanique d'une goupille cisaillable s'opposant en temps normal à sa translation dans son canal rectiligne.

Différents moyens connus peuvent être mis en oeuvre pour assurer la mise en écoulement simultanée sous pression de l'isocyanate, du polyol et du gaz émulsifiant dans la chambre de mélange à partir du déplacement de la gâchette manométrique. Dans une réalisation préférée de l'invention toutefois, ce résultat est obtenu à l'aide de soupapes fermant les parties inférieures des réservoirs d'isocyanate et de polyol et qui viennent, sous l'effet de la pression, s'enfiler dans des ouvertures pratiquées dans la gâchette manométrique libérant ainsi l'écoulement des produits dans des canaux prévus à cet effet et les dirigeant vers la chambre de mélange; dans cette même réalisation préférée de l'invention, le récipient de gaz inerte est en communication avec une tête cisaillable, située dans le canal rectiligne de déplacement de la gâchette manométrique et que celle-ci vient cisailler lors de sa translation, libérant ainsi l'échappement du gaz.

Selon une caractéristique également intéressante de la présente invention, l'arrivée de l'isocyanate et du polyol dans la chambre de mélange se fait à la partie supérieure selon deux buses d'injection décalées par rapport à l'axe de la chambre de façon à induire dans celle-ci un mouvement rotatoire tourbillonnaire du mélange ainsi créé; à la sortie de la chambre de mélange est située une crépine à plusieurs orifices latéraux pour provoquer localement un écoulement turbulent et augmenter ainsi l'homogénéité du mélange émulsionné.

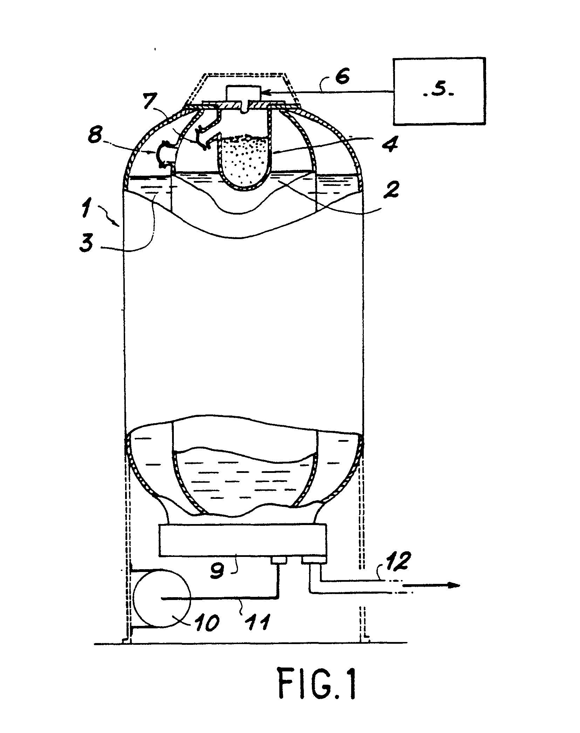

De toute façon, l'invention sera mieux comprise en se référant à la description qui suit d'un exemple de réalisation du dispositif de production de mousse polyuréthane. Cette description qui sera donnée à titre surtout indicatif et non limitatif se fera en référence aux figures 1 à 3 ci-jointes, sur lesquelles:

- la figure 1 montre le schéma d'implantation générale du dispositif objet de l'invention,
- la figure 2 montre le détail de réalisation du mélangeur à seuil de pression situé à la base du réservoir de stockage,
- la figure 3 montre selon une coupe AA de la figure 2 la disposition des buses d'injection des deux composants dans la chambre de mélange.

Sur la figure 1, on a représenté le réservoir étanche 1 qui comprend deux compartiments concentriques également étanches, à savoir un compartiment central 2 comportant par exemple l'isocyanate de formule RNCO dans laquelle R est un radical alkyl, et le compartiment externe périphérique 3 renfermant le polyol. Ces deux réservoirs étanches permettent facilement d'inclure dans le polyol la quantité utile d'agents porogènes sans aucun risque de variation de la composition de ce mélange au cours du temps.

A la partie supérieure du réservoir 1, est prévu le déclencheur à propergol ou dit "à poudre explosive" 4 qui peut libérer sous l'action d'un ordre de déclenchement venant du déclencheur 5 par le fil 6 un volume de gaz chaud sous pression élevée qui produit le claquage des opercules 7 et 8 et permet à ce gaz sous pression de se répandre librement dans les compartiments 2 et 3 du réservoir 1. Toute l'énergie ainsi nécessaire au fonctionnement du dispositif est libérée en un temps très court, ce qui est spécialement avantageux pour sa mise en oeuvre rapide et automatique.

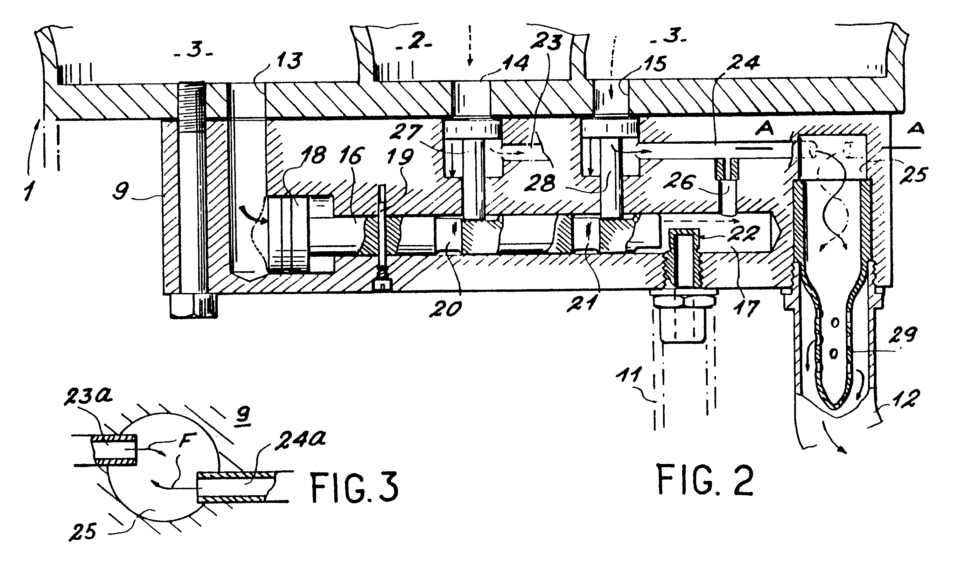

A la partie basse du réservoir de stockage 1, se trouve un mélangeur à seuil de pression 9 que l'on verra plus en détail ensuite sur la figure 2, et qui assure, à partir d'un ordre de déclenchement du déclencheur 5, le mélange et l'émulsion correcte de l'isocyanate et du polyol contenus dans les compartiments 2 et 3, leur émulsion étant produite par un gaz neutre stocké sous pression dans un réservoir 10 et conduit au mélangeur 9 par la canalisation 11. Ce gaz neutre sous pression peut être de nature quelconque, pourvu qu'il n'agisse pas chimiquement sur les composants producteurs de la mousse; c'est de façon courante, par exemple de l'air ou de l'azote. Le mélange ainsi produit et émulsifié est évacué vers l'extérieur par la canalisation 12 vers son lieu d'utilisation immédiate.

Dans une variante, un second réservoir pourrait être prévu, en parallèle avec le réservoir 10, et contenant un gaz toxique lacrymogène ou paralysant, en vue de produire un effet particulier sur l'environnement humain.

Sur la figure 2, on à représenté plus en détail le mélangeur à seuil de pression 9 au sommet duquel on reconnaît les compartiments 2 et 3 du réservoir 1, qui communiquent avec le mélangeur 9 respectivement par les canalisations 13, 14 et 15. Ce mélangeur à seuil de pression 9 comporte essentiellement une gachette manométrique 16 pouvant se mouvoir en translation rectiligne dans un canal 17 sous l'effet de la pression régnant dans le compartiment 3 et transmise par le conduit 13 sur la tête 18 de la gâchette manométrique 16, conçue à cet effet en forme de tête de piston. La translation de cette gâchette manométrique 16 dans le canal 17 est empêchée, en temps normal, par une goupille cisaillable 19 dont la résistance mécanique est calibrée pour qu'elle résiste jusqu'à l'apparition d'un seuil de pression dans le compartiment 3 correspondant à la mise à feu du déclencheur à poudre 4. Cette gâchette manométrique comporte deux orifices 20 et 21 qui la traversent de part en part et dont le rôle sera expliqué ultérieurement.

Dans l'extrémité du canal 17 débouche également la canalisation 11 d'amenée du gaz émulsifiant laquelle se termine par une tête 22 comportant un point d'affaiblissement dont le rôle est de permettre son cisaillage facile lors d'une translation éventuelle de la gâchette manométrique 16.

Des canalisations 23 et 24 conduisent respectivement l'isocyanate et le polyol des compartiments 2 et 3 du réservoir 1 vers la chambre de mélange 25 de ces deux produits. Elles se terminent, à leur entrée dans cette chambre 25 par deux buses 23a et 24a. Une canalisation 26 permet l'arrivée du gaz d'émulsion à partir de la conduite 11 dans la conduite 24 d'amenée du polyol à la chambre de mélange 25.

Les ouvertures 14 et 15 sont normalement fermées en position de stockage des produits par des soupapes 27 et 28 qui viennent en butée contre des parties pleines de la gâchette manométrique 16.

Enfin, une crépine 29, percée de trous, est située entre la chambre de mélange 25 et le début de la canalisation de sortie 12 des produits mélangés et émulsionnés.

Le fonctionnement du système est le suivant. Lorsqu'à la suite du déclenchement du déclencheur à poudre 4, une pression importante s'exerce dans les compartiments 2 et 3 sur l'isocyanate et le polyol, la gâchette manométrique 16 est soumise à la pression résultant de l'action des gaz précédents sur la tête de piston 18. Lorsque cette pression dépasse le seuil de tarage de la goupille cisaillable 19, celle-ci se rompt, libérant ainsi la gâchette manométrique 16 qui se déplace, sur la figure 2, en translation vers la droite. Ce déplacement en translation a trois conséquences. D'une part, il permet aux soupapes 27 et 28, également soumises à la pression régnant dans les compartiments 2 et 3, de s'enfiler dans les orifices 20 et 21 au droit desquells elles se situent, libérant ainsi l'ouverture des orifices 14 et 15 et le libre passage de l'isocyanate et du polyol dans les canalisations 23 et 24 leur permettant ainsi d'atteindre la chambre de mélange 25. En même temps, la tête 22 de la canalisation 11 est cisaillée par l'extrémité de la gâchette manométrique 16 libérant ainsi le gaz d'émulsion dans la conduite 26 et lui permettant de rejoindre le polyol de la conduite 24 vers la chambre de mélange 25.

Sur la figure 3, on voit que l'arrivée des canalisations 23 et 24 dans cette chambre 25 est prévue sous forme de deux buses 23a et 24a, excentrées par rapport à l'axe de cette chambre, ce qui permet au polyol et à l'isocyanate déversés par les buses 23a et 24a, d'amorcer dans la chambre 25 un mouvement tourbillonnaire simulé par les flèches F. La crépine 29 située en aval du système permet alors, grâce aux nombreux trous dont ses parois latérales sont munies, de fractionner le mélange initial en provoquant un écoulement localement turbulent. L'association des deux buses d'injection 23a et 24a et de la crépine 29 permet d'obtenir une homogénéité parfaite du mélange des constituants, indispensable pour garantir la qualité de la mousse de polyuréthane finalement délivrée dans la canalisation 12.

Le gaz injecté à partir du récipient 10 par la canalisation 11 dans le canal 24 du polyol, réalise une émulsion très fine du mélange. L'isocyanate et le polyol ainsi traités sont ensuite dosés et intimement mélangés dans la chambre 25. Le dosage des produits est en effet assuré par réglage des buses d'injection 23a et 24a, réglage qui prend en compte la pression de fonctionnement et la viscosité des produits dans la gamme de température en cause. Le mélange intime des produits est bien assuré conformément à l'invention, par la disposition désaxée des buses 23a et 24a qui créent un écoulement tourbillonnaire dans la chambre de mélange 25.

Le dispositif objet de l'invention fonctionne parfaitement de façon autonome automatique et rapide en n'importe quel lieu d'utilisation et est entièrement automatique à partir de l'ordre électrique initial du circuit 5 qui provoque la mise à feu de la pressurisation pyrotechnique à l'aide du déclencheur 4. L'absence en aval de tout dispositif mécanique complexe ou mobile assure à ce système un niveau de fiabilité très élevé et le stockage des produits dans des réservoirs étanches scellés constitue la meilleure garantie de longévité de ceux-ci. Enfin, on peut noter que la puissance du générateur de gaz 4 associé à la capacité importante de la chambre de mélange 25 permet la production très rapide en quantité importante de mousse de polyuréthane.

## Revendications

1. Dispositif autonome et automatique de production rapide de mousse polyuréthane du genre de ceux dans lesquels ladite mousse est produite par mélange d'un isocyanate avec un polyalcool, notamment le polyol, comportant:
- des moyens de stockage étanche (1) à deux compartiments (2, 3) dont chacun conserve l'un des produits précédents, un déclencheur (4) générateur d'un gaz de pressurisation desdits moyens de stockage,
- un mélangeur apte à recevoir les deux produits précédents, dont le fonctionnement est commandé automatiquement par la pression régnant dans les moyens de stockage et comportant une chambre de mélange (25) dans laquelle parviennent sous l'effet de cette même pression l'isocyanate et le polyol, caractérisé en ce que le déclencheur est du type à propergol solide, en ce que chacun des deux produits est introduit dans la chambre de mélange (25) par des buses d'injection latérales (23a, 24a) produisant une mise en rotation du mélange, le polyol étant préalablement émulsionné dans le mélangeur (9) par un gaz neutre, tel que l'air ou l'azote, en provenance d'un récipient de stockage sous pression (10) dont l'ouverture est commandée également de façon automatique par l'entrée en fonctionnement du mélangeur à seuil (9).

2. Dispositif autonome et automatique de production rapide de mousse polyuréthane selon la revendication 1, caractérisé en ce que l'organe de déclenchement du mélangeur (9) est une gâchette manométrique à seuil de pression (16) pouvant coulisser dans un canal rectiligne (17) entre une position de stockage où elle est maintenue en place par une goupille cisaillable calibrée (19) et une position de fonctionnement dans laquelle elle libère l'écoulement de l'isocyanate, du polyol et du gaz d'émulsion dans la chambre de mélange, le passage de la position de stockage à la position de fonctionnement étant commandé par l'apparition dans le réservoir de stockage (1), d'un seuil de pression qui agit sur la tête (18) de la gâchette, et la contraint à rompre la goupille calibrée (19) et à se déplacer en translation dans son canal rectiligne (17).

3. Dispositif autonome et automatique de production rapide de mousse polyuréthane selon l'une quelconque des revendications 1 et 2, caractérisé en ce que la sortie de la chambre de mélange (25) comporte une crépine (29) à plusieurs orifices latéraux pour provoquer localement un écoulement turbulent et augmenter l'homogénéité du mélange émulsionne.

**Patentansprüche**

1. In sich geschlossene, automatische Vorrichtung zur schnellen Erzeugung von Polyurethanschaum derart, bei welcher der Schaum durch Mischen eines Isocyanats mit einem Polyalkohol, insbesondere Polyol, gebildet wird, die umfaßt:
- dichte Lagereinrichtungen (1) mit zwei Kammern (2, 3), von denen jede eines der Ausgangsprodukte, einen Auslöser (4) zur Erzeugung eines Gases, um damit die Lagereinrichtungen unter Druck zu setzen, enthält,
- einen Mischer, der die beiden Ausgangsprodukte aufnehmen kann, dessen Betrieb automatisch gesteuert wird durch den in den Lagereinrichtungen herrschenden Druck und der umfaßt eine Mischkammer (25), in welche das Isocyanat und das Polyol unter dem Einfluß dieses gleichen Druckes gelangen,
dadurch gekennzeichnet, daß der Auslöser ein solcher vom festen Propergol-Typ ist, daß jedes der beiden Produkte durch seitliche Injektionsdüsen (23a, 24a) in die Mischkammer (25) eingeführt wird, welche die Mischung in Rotation versetzen, wobei das Polyol vorher durch ein neutrales Gas, wie Luft oder Stickstoff, in dem Mischer (9) emulgiert worden ist, das aus einem unter Druck stehenden Vorratsbehälter (10) stammt, dessen Öffnung ebenfalls automatisch gesteuert wird durch Inbetriebsetzen des Stufenmischers (9).

2. In sich geschlossene, automatische Vorrichtung zur schnellen Erzeugung von Polyurethanschaum nach Anspruch 1, dadurch gekennzeichnet, daß das Organ zur Auslösung des Mischers (9) ein Manometerdrücker mit einer Druckstufe (16) ist, der in dem rechteckigen Kanal (17) zwischen einer Warteposition, in der er durch einen abschneidbaren kalibrierten Stift (19) festgehalten wird, und einer Betriebsposition, in der er das Einfließen des Isocyanats, des Polyols und des Emulgiergases in die Mischkammer freigibt, gleiten kann, wobei der Übergang von der Warteposition in die Betriebsposition dadurch gesteuert wird, daß in dem Vorratsbehälter (1) ein Schwellenwertsdruck auftritt, der auf den Kopf (18) des Drückers wirkt und ihn zwingt, den kalibrierten Stift (19) zu zerbrechen und sich in seinem rechteckigen Kanal (17) translatorisch zu verschieben.

3. In sich geschlossene, automatische Vorrichtung zur schnellen Erzeugung von Polyurethanschaum nach einem der Ansprüche 1 und 2, dadurch gekennzeichnet, daß der Ausgang der Mischkammer (25) ein Sieb (29) mit mehreren seitlichen Öffnungen zur lokalen Erzeugung eines turbulenten Stromes und zur Verbesserung der Homogenität der emulgierten Mischung aufweist.

**Claims**

1. Automatic, autonomous apparatus for the fast production of polyurethane foam of the type in which said foam is produced by mixing an isocyanate with a polyalcohol, particularly polyol, comprising a tight storage tank having two compartments (2, 3), each of which contains one of the aforementioned products, a starter (4), which generates a gas for pressurizing the storage means (1), a mixer (9), whose operation is automatically controlled by the pressure prevailing in the storage means and which has a mixing chamber (25) into which, under the effect of said same pressure, pass the isocyanate and the polyol, characterized in that the starter is of the solid propellant type, that each of the two products is introduced into the mixing chamber (25) by lateral injection nozzles (23a, 24a) producing a rotation of the mixture, the polyol being previously emulsified by a neutral gas, such as air or nitrogen, which comes from a pressurized storage container (10), whose opening is also automatically controlled by the threshold mixer (9) coming into operation.

2. Automatic, autonomous apparatus for the fast production of polyurethane foam according to claim 1, characterized in that the mixer (9) trip starter member is a manometric trigger means having a pressure threshold (16), which is able to slide in a rectilinear channel (17) between a storage position, where it is maintained in place by a calibrated shearable pin (19) and an operating position in which it releases the outflow of the isocyanate, polyol and the emulsifying gas in the mixing chamber, passing from the storage position to the operating position being controlled by the appearance within the storage tank (1) of a pressure threshold, which acts on the head (18) of the trigger means and forces it to break the calibrated pin (19) and move in translation in its rectilinear channel.

3. Automatic, autonomous apparatus for the fast production of polyurethane foam according to either of the claims 1 or 2, characterized in that outlet of the mixing chamber (25) has a sprinkler (29) with a plurality of lateral orifices for locally bringing about a turbulent outflow and for increasing the homogeneity of the emulsified mixture.

FIG.1

FIG. 2

FIG. 3